# FASCICULE DE BREVET EUROPEEN

(11) **EP 3 164 782 B1**
(45) Date de publication et mention de la délivrance du brevet: **22.06.2022**
(21) Numéro de dépôt: 15753719.2
(22) Date de dépôt: 02.07.2015
(51) Int. Cl.: G06F 1/30, G06F 11/14

(54) **PROCEDE DE SECURISATION DE LA COUPURE D'ALIMENTATION D'UN EQUIPEMENT USB**
VERFAHREN ZUR SICHERUNG DER UNTERBRECHUNG DER ENERGIEVERSORGUNG AN EINE USB-VORRICHTUNG
METHOD FOR SECURING THE CUTTING OFF OF THE POWER SUPPLY TO A USB DEVICE

(30) Priorité: 03.07.2014 FR 1456418
(43) Date de publication de la demande: 10.05.2017
(73) Titulaire: PSA Automobiles SA, 78300 Poissy (FR)
(72) Inventeur: ADJADJ, Mehdi, F-95000 Cergy (FR); BOISSERIE, Antony, F-91320 Wissous (FR)
(74) Mandataire: Jeannin, Laurent Jean-Pierre
(86) Numéro de dépôt international: PCT/FR2015/051830
(87) Numéro de publication internationale: WO 2016/001594

(56) Documents cités:
- EP-A2- 2 629 173
- WO-A1-2014/075823
- US-A- 6 148 354
- US-A1- 2009 249 087
- US-A1- 2011 016 260
- US-A1- 2011 093 650
- US-A1- 2012 137 093
- US-B1- 8 674 823
- US-B2- 7 421 552
- US-B2- 8 032 787

## Description

L'invention concerne la sécurisation de la coupure d'alimentation d'un équipement USB, en particulier dans le contexte d'un réseau de communication conforme au standard USB 2.0 impliquant la mise en œuvre d'équipements compatibles.

Comme cela est bien connu de l'homme du métier, le standard USB, pour Universal Serial Bus selon l'acronyme anglais, définit une norme relative à un bus informatique en transmission série permettant la connexion d'équipements, généralement des périphériques informatiques, à un ordinateur, calculateur ou serveur. Apparu en 1996, ce standard a connu plusieurs évolutions, aboutissant à la définition des standards USB 2.0, USB 3.0 et USB 3.1. Via un réseau USB, les petits périphériques informatiques peuvent en outre être alimentés en énergie. La présente invention vise notamment une mise en œuvre au cœur d'un réseau au standard USB 2.0.

Dans un réseau USB, l'ordinateur, calculateur ou serveur assume le statut de maître du réseau tandis que les équipements périphériques qui y sont connectés sont esclaves du réseau.

L'invention porte plus précisément sur l'inconvénient majeur associé en particulier aux standards USB 2.0 et antérieurs, et relatif au fait que les équipements informatiques USB, conformes à ces normes, ne sont pas informés lorsqu'une coupure d'alimentation est sur le point de se produire.

En l'absence d'un tel mécanisme, la coupure d'alimentation peut engendrer une corruption des données enregistrées dans la mémoire de l'équipement USB, voire provoquer un dysfonctionnement de cet équipement USB.

Le problème général, auquel la présente invention se propose d'apporter une solution, concerne par conséquent l'absence actuelle d'un mécanisme d'information d'un équipement USB connecté à un réseau USB lorsque l'alimentation de ce dernier est sur le point d'être coupée.

L'homme du métier connaît différents dispositifs et procédés visant à gérer la consommation d'énergie d'un équipement USB, comme décrits dans le document US 20100145884 A1, ou encore cherchant à gérer la survenance d'une coupure d'alimentation sur un réseau éthernet, comme dans le document US 20070288784 A1. Le document US 6148354 A décrit un réseau USB comprenant un calculateur maître du réseau et un équipement USB esclave comprenant une mémoire flash. Le document US 2009/249087 A1 décrit un procédé pour prévenir d'une coupure imminente de l'alimentation comprenant la sauvegarde des donnes dans une mémoire flash.

Cependant, le standard USB et le standard USB 2.0 ne fournissent aucun mécanisme d'anticipation de la coupure d'alimentation d'un équipement USB interconnecté, par l'intermédiaire d'un réseau USB, avec un calculateur maître dudit réseau USB.

Il existe donc un besoin pour un procédé de sécurisation de la procédure de coupure d'alimentation d'un équipement USB. Pour atteindre cet objectif, la présente invention prévoit l'utilisation de l'information relative à une coupure d'alimentation imminente, connue du calculateur maître du réseau.

A cet effet, l'invention a pour objet un procédé de sécurisation de la coupure d'alimentation d'un équipement selon la revendication 1.

En particulier, le réseau USB est conforme au standard USB 2.0.

Avantageusement, le calculateur peut envoyer sur le réseau USB le message d'information, contenant une information de coupure d'alimentation de l'équipement USB, trois fois successivement, à intervalle de temps fixe.

Selon un mode de réalisation, ledit intervalle de temps fixe est égal à 50 millisecondes.

La procédure de préparation de l'équipement USB à la coupure d'alimentation imminente comprend la sauvegarde d'un ensemble de paramètres dans un espace mémoire de l'équipement USB.

Ledit message d'information comprend en outre une indication de l'intervalle de temps disponible pour l'équipement USB avant que la coupure d'alimentation ne devienne effective.

L'invention vise également un système informatique apte à mettre en œuvre le procédé de sécurisation de la procédure de coupure d'alimentation d'un équipement USB selon la revendication 5.

Un tel réseau informatique comprend un réseau USB par l'intermédiaire duquel sont interconnectés un calculateur, maître du réseau, et au moins un équipement USB, esclave du réseau, le calculateur comprenant des moyens d'acquisition d'une information de coupure d'alimentation imminente concernant ledit équipement USB, et ledit calculateur comprenant en outre des moyens d'émission d'un message d'information à destination dudit équipement USB destiné à informer ledit équipement USB de ladite coupure d'alimentation imminente le concernant. Le réseau comprend toutes les caractéristiques de la revendication 5.

Avantageusement, le calculateur, par l'intermédiaire des moyens d'émission, envoie à trois reprises, successivement et à intervalle de temps fixe, ledit message d'information destiné à informer ledit équipement USB de la coupure d'alimentation imminente le concernant.

Ledit intervalle de temps fixe peut avantageusement être égal à 50 millisecondes.

L'invention vise en outre un véhicule automobile embarquant un système informatique mettant en œuvre le procédé de sécurisation de la procédure de coupure d'alimentation d'un équipement USB brièvement ci-dessus.

D'autres caractéristiques et avantages de l'invention apparaîtront à la lecture de la description détaillée des modes de réalisation de l'invention, donnés à titre d'exemple uniquement et en référence au dessin qui montre :

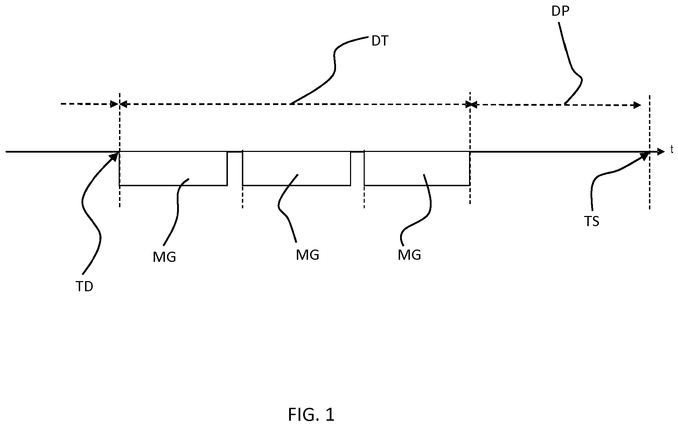

- figure 1, un schéma représentant la mise en œuvre du procédé de sécurisation de la coupure d'alimentation d'un équipement USB selon l'invention.

Dans ce qui va suivre, les modes de réalisation décrits s'attachent à une mise en œuvre du procédé selon l'invention, dans un contexte général d'utilisation d'un réseau USB. Il est à noter qu'une utilisation particulière, au sein d'un réseau USB embarqué dans un véhicule automobile, est notamment visée par la présente invention. Par ailleurs, toute mise en œuvre dans le contexte d'un réseau USB embarqué dans tout type de véhicule terrestre est également visée par la présente invention.

La figure 1 représente schématiquement la mise en œuvre du procédé de sécurisation de la procédure de coupure d'alimentation d'un équipement USB selon l'invention.

Sur la figure 1, sont représentés les événements et messages envoyés sur un bus USB en fonction du temps, dans le contexte d'un réseau USB par l'intermédiaire duquel sont interconnectés un calculateur, maître du réseau, et au moins un équipement USB, esclave du réseau. La présente invention est prévue, en particulier, pour une mise en œuvre dans un réseau conforme au standard USB 2.0.

Lorsqu'une coupure d'alimentation est sur le point d'impacter un équipement USB, ce dernier n'est actuellement pas automatiquement prévenu à l'avance, notamment dans le cadre du standard USB 2.0. En revanche, le calculateur - maître du réseau, est apte à posséder cette information relative à la coupure d'alimentation, soit parce qu'il en est l'initiateur, soit parce qu'il possède les moyens d'acquérir cette information par une source extérieure, notamment dans le cas d'un réseau multiplexé.

Ainsi, le calculateur - maître, par des moyens adaptés, acquiert une information relative à la coupure d'alimentation de l'équipement USB. L'invention consiste alors à sécuriser la procédure de coupure d'alimentation de l'équipement USB par la transmission à ce dernier d'un message d'information MG lui permettant d'engager une procédure de préparation à la coupure d'alimentation imminente le concernant. Ledit message d'information MG est interprété par l'équipement USB comme un message de commande lui enjoignant de se préparer à la coupure d'alimentation imminente.

Ainsi, la réception par l'équipement USB d'une trame correspondant à un message MG, d'information ou de commande de préparation à la coupure d'alimentation, signale à l'équipement USB qu'une coupure d'alimentation le concernant va se produire de façon imminente. Le message d'information MG comprend en outre une information relative à la durée DP disponible pour que l'équipement USB se prépare à la coupure d'alimentation, qui survient de façon effective à la date TS.

Selon l'invention, l'équipement USB se consacre alors à la préparation de la coupure d'alimentation. L'équipement USB sauvegarde dans sa mémoire interne, certaines données telles que le contexte logiciel dans lequel il se trouve. Il peut en outre engager une procédure fonctionnelle spécifique, prévue à cet effet, en vue de préparer la coupure imminente de son alimentation. La connaissance par l'équipement USB de la durée DP disponible pour mettre en œuvre la procédure de préparation à la coupure d'alimentation permet notamment d'adapter ladite préparation en fonction de ladite durée DP disponible.

En résumé, dès la détection, à la date TD, par le calculateur, maître du réseau USB, d'une condition impliquant la coupure imminente de l'alimentation de l'équipement USB, ledit calculateur transmet sur le réseau USB un message MG pour informer ledit équipement USB, de façon à lui permettre de se préparer à ladite coupure d'alimentation, qui survient à la date TS.

Selon un mode de réalisation, le message MG d'information, ou de commande, envoyé sur le réseau USB par le calculateur à destination de l'équipement USB, est envoyé trois fois successivement, étant donné que la perte d'un message MG sur le bus USB est possible.

Il est considéré que trois émissions successives sont suffisantes pour couvrir le maximum de cas de défaillance du réseau USB. En outre, selon ce mode de réalisation, les trois émissions successives du message MG se font à intervalle de temps fixe, ledit intervalle de temps pouvant par exemple être égal à 50 millisecondes. L'envoi de ces messages MG prend, en tout, une durée DT.

Lorsque la donnée relative à la durée DP disponible avant la coupure effective de l'alimentation est connue et transmise avec le message MG, l'équipement USB a alors la connaissance de la durée minimale dont il dispose pour se préparer à la coupure de son alimentation.

L'alimentation de l'équipement USB est ensuite coupée à la date TS, après qu'un temps supérieur ou égal à la durée de préparation DP s'est écoulé, à compter de la réception par l'équipement USB du message MG.

Selon un mode de réalisation, le ou les message(s) MG est (sont) envoyé(s) de manière événementielle, sur le réseau USB, par exemple via un transfert en masse, également couramment appelé transfert par canal bulk.

Du point de vue du calculateur, maître du réseau, la mise en œuvre de cette fonctionnalité, consistant en l'envoi à l'équipement USB d'un message MG d'information ou de commande, peut être implémentée à l'aide d'un driver de classe spécifique. Du point de vue de l'équipement USB, cette fonctionnalité, consistant en la réception et le décodage du message MG, en vue de mettre en œuvre une procédure de préparation à la coupure d'alimentation, est mise en œuvre au moyen d'une implémentation logicielle dans les couches basses des pilotes, ou drivers, de l'équipement USB.

Il est en outre possible, à titre d'alternative, que l'envoi sur le réseau USB du message MG à destination de l'équipement USB, soit réalisé par le calculateur au moyen d'une requête appartenant à une classe USB existante, par exemple par l'intermédiaire d'une requête SCSI de la classe « Mass Storage », si celle-ci est à disposition de l'équipement USB.

L'invention est notamment prévue pour une mise en œuvre, au sein d'un système informatique embarqué dans un véhicule automobile, sans que cela ne doive être interprété comme une limitation.

Il est précisé, en outre, que la présente invention n'est pas limitée aux exemples décrits ci-dessus et est susceptible de nombreuses variantes accessibles à l'homme de l'art.

## Revendications

1. Procédé de sécurisation de la coupure d'alimentation d'un équipement USB, mis en œuvre dans un réseau USB par l'intermédiaire duquel sont interconnectés un calculateur, maître du réseau, et au moins un équipement USB, esclave du réseau, **caractérisé en ce que**, lorsqu'une information de coupure d'alimentation imminente de l'équipement USB est connue dudit calculateur, ledit procédé comprend la mise en œuvre des étapes successives suivantes :
- l'envoi par le calculateur d'un message d'information (MG) sur le réseau USB, contenant une information de coupure d'alimentation de l'équipement USB ;
- la réception du message d'information (MG) par l'équipement USB ;
- la mise en œuvre par l'équipement USB d'une procédure de préparation de l'équipement USB à la coupure d'alimentation imminente, la procédure de préparation de l'équipement USB à la coupure d'alimentation imminente comprenant la sauvegarde d'un ensemble de paramètres dans un espace mémoire de l'équipement USB,
- ledit message d'information (MG) comprenant en outre une indication de l'intervalle de temps disponible (DP) pour l'équipement USB avant que la coupure d'alimentation ne devienne effective.

2. Procédé de sécurisation de la coupure d'alimentation d'un équipement USB selon la revendication 1, **caractérisé en ce que** le réseau USB est conforme au standard USB 2.0.

3. Procédé de sécurisation de la coupure d'alimentation d'un équipement USB selon l'une quelconque des revendications précédentes, **caractérisé en ce que** le calculateur envoie sur le réseau USB le message d'information (MG), contenant une information de coupure d'alimentation de l'équipement USB, trois fois successivement, à intervalle de temps fixe.

4. Procédé de sécurisation de la coupure d'alimentation d'un équipement USB selon la revendication 3, **caractérisé en ce que** ledit intervalle de temps fixe est égal à 50 millisecondes.

5. Système informatique apte à mettre en œuvre le procédé selon l'une quelconque des revendications 1 à 4, comprenant un réseau USB par l'intermédiaire duquel sont interconnectés un calculateur, maître du réseau, et au moins un équipement USB, esclave du réseau, le calculateur comprenant des moyens d'acquisition d'une information de coupure d'alimentation imminente concernant ledit équipement USB, **caractérisé en ce que** ledit calculateur comprend en outre des moyens d'émission d'un message d'information (MG) à destination dudit équipement USB, destiné à informer ledit équipement USB de ladite coupure d'alimentation imminente le concernant, ledit message d'information (MG) comprenant en outre une indication de l'intervalle de temps disponible (DP) pour l'équipement USB avant que la coupure d'alimentation ne devienne effective, ledit équipement USB comprenant en outre des moyens de réception du message d'information (MG) et des moyens de préparation à la coupure d'alimentation imminente, configurés pour sauvegarder un ensemble de paramètres dans un espace mémoire de l'équipement USB.

6. Système informatique selon la revendication 5, **caractérisé en ce que** le calculateur, par l'intermédiaire des moyens d'émission, envoie à trois reprises, successivement et à intervalle de temps fixe, ledit message d'information (MG) destiné à informer ledit équipement USB de la coupure d'alimentation imminente le concernant.

7. Système informatique selon l'une quelconque des revendications 5 à 6, **caractérisé en ce que** ledit intervalle de temps fixe est égal à 50 millisecondes.

8. Véhicule automobile, **caractérisé en ce qu'**il comprend un système informatique selon l'une quelconque des revendications 5 à 7.

## Patentansprüche

1. Verfahren zur Sicherung der Unterbrechung der Stromversorgung einer USB-Ausrüstung, das in einem USB-Netzwerk eingesetzt wird, über das ein Rechner, Master des Netzwerks, und mindestens eine USB-Ausrüstung, Slave des Netzwerks, miteinander verbunden sind, **dadurch gekennzeichnet, dass**, wenn eine Information über eine bevorstehende Unterbrechung der Stromversorgung der USB-Ausrüstung dem Rechner bekannt ist, das Verfahren die Durchführung der folgenden aufeinanderfolgenden Schritte umfasst:
- das Senden einer Informationsnachricht (MG) durch den Rechner über das USB-Netzwerk, die eine Information über die bevorstehende Unterbrechung der Stromversorgung der USB-Ausrüstung enthält;
- Empfang der Informationsnachricht (MG) durch die USB-Ausrüstung ;
- die Durchführung eines Verfahrens durch die USB-Ausrüstung zur Vorbereitung der USB-Ausrüstung auf die bevorstehende Stromabschaltung, wobei das Verfahren zur Vorbereitung der USB-Ausrüstung auf die bevorstehende Stromabschaltung die Speicherung eines Satzes von Parametern in einem Speicherraum der USB-Ausrüstung umfasst,
- wobei die Informationsnachricht (MG) außerdem eine Angabe des für die USB-Ausrüstung verfügbaren Zeitintervalls (DP) umfasst, bevor die Stromabschaltung wirksam wird.

2. Verfahren zur Sicherung der Stromabschaltung einer USB-Ausrüstung nach Anspruch 1, **dadurch gekennzeichnet, dass** das USB-Netzwerk dem Standard USB 2.0 entspricht.

3. Verfahren zur Sicherung der Unterbrechung der Stromversorgung eines USB-Geräts nach einem der vorhergehenden Ansprüche, **dadurch gekennzeichnet, dass** der Rechner die Informationsnachricht (MG), die eine Information über die Unterbrechung der Stromversorgung des USB-Geräts enthält, dreimal nacheinander in einem festen Zeitintervall über das USB-Netzwerk sendet.

4. Verfahren zur Sicherung der Unterbrechung der Stromversorgung eines USB-Geräts nach Anspruch 3, **dadurch gekennzeichnet, dass** das feste Zeitintervall gleich 50 Millisekunden ist.

5. Computersystem, das geeignet ist, das Verfahren nach einem der Ansprüche 1 bis 4 umzusetzen, mit einem USB-Netzwerk, über das ein Rechner, Master des Netzwerks, und mindestens ein USB-Gerät, Slave des Netzwerks, miteinander verbunden sind, wobei der Rechner Mittel zur Erfassung einer Information über eine bevorstehende Stromunterbrechung bezüglich des USB-Geräts umfasst, **dadurch gekennzeichnet, dass** der Rechner außerdem Mittel zum Senden einer Informationsnachricht (MG) an das USB-Gerät umfasst, die dazu bestimmt ist, die USB-Ausrüstung über den sie betreffenden bevorstehenden Stromausfall zu informieren, wobei die Informationsnachricht (MG) außerdem eine Angabe des für die USB-Ausrüstung verfügbaren Zeitintervalls (DP) umfasst, bevor der Stromausfall wirksam wird, wobei die USB-Ausrüstung außerdem Mittel zum Empfang der Informationsnachricht (MG) und Mittel zur Vorbereitung auf den bevorstehenden Stromausfall umfasst, die so konfiguriert sind, dass sie einen Satz von Parametern in einem Speicherraum der USB-Ausrüstung speichern.

6. Computersystem nach Anspruch 5, **dadurch gekennzeichnet, dass** der Rechner über die Sendemittel dreimal nacheinander und in einem festen Zeitintervall die Informationsnachricht (MG) sendet, die dazu bestimmt ist, die USB-Ausrüstung über die bevorstehende Unterbrechung der Stromversorgung, die sie betrifft, zu informieren.

7. Computersystem nach einem der Ansprüche 5 bis 6, **dadurch gekennzeichnet, dass** das feste Zeitintervall gleich 50 Millisekunden ist.

8. Kraftfahrzeug, **dadurch gekennzeichnet, dass** es ein Computersystem nach einem der Ansprüche 5 bis 7 umfasst.

## Claims

1. A method for securing the power cut of a USB equipment, implemented in a USB network through which are interconnected a computer, master of the network, and at least one USB equipment, slave of the network, **characterized in that**, when an information of imminent power cut of the USB equipment is known by said computer, said method comprises the implementation of the following successive steps :
- the sending by the computer of an information message (MG) on the USB network, containing an information of power cut of the USB equipment;
- the reception of the information message (MG) by the USB equipment;
- implementing by the USB device a procedure for preparing the USB device for the impending power failure, the procedure for preparing the USB device for the impending power failure comprising saving a set of parameters in a memory space of the USB device,
- said information message (MG) further comprising an indication of the time interval available (DP) for the USB device before the power cut becomes effective.

2. A method of securing the power cut-off of a USB device according to claim 1, **characterised in that** the USB network complies with the USB 2.0 standard.

3. Method of securing the power cut of a USB equipment according to any of the preceding claims, **characterised in that** the computer sends the information message (MG), containing information on the power cut of the USB equipment, three times successively, at a fixed time interval, over the USB network.

4. Method for securing the power cut of a USB equipment according to claim 3, **characterized in that** said fixed time interval is equal to 50 milliseconds.

5. Computer system capable of implementing the method according to any one of claims 1 to 4, comprising a USB network via which a computer, master of the network, and at least one USB equipment, slave of the network, are interconnected, the computer comprising means for acquiring information about an imminent power cut concerning the said USB equipment, **characterised in that** the said computer also comprises means for sending an information message (MG) to the said USB equipment, intended to inform said USB equipment of said imminent power cut concerning it, said information message (MG) further comprising an indication of the time interval available (DP) for the USB equipment before the power cut becomes effective, said USB equipment further comprising means for receiving the information message (MG) and means for preparing for the imminent power cut, configured to save a set of parameters in a memory space of the USB equipment.

6. Computer system according to claim 5, **characterised in that** the computer, via the transmission means, sends three times, successively and at a fixed time interval, the said information message (MG) intended to inform the said USB equipment of the imminent power cut concerning it.

7. A computer system according to any one of claims 5 to 6, **characterised in that** said fixed time interval is equal to 50 milliseconds.

8. A motor vehicle, **characterised in that** it comprises a computer system according to any of claims 5 to 7.
